# EUROPÄISCHE PATENTSCHRIFT

(11) **EP 3 232 065 B1**
(45) Veröffentlichungstag und Bekanntmachung des Hinweises auf die Patenterteilung: **08.01.2020**
(21) Anmeldenummer: 17163473.6
(22) Anmeldetag: 29.03.2017
(51) Int. Cl.: F04D 13/06

(54) **PUMPENMOTOR MIT EINEM FESTLAGER**
PUMP MOTOR WITH A FIXED BEARING
MOTEUR DE POMPE COMPRENANT UN PALIER FIXE

(30) Priorität: 15.04.2016 DE 102016206405
(43) Veröffentlichungstag der Anmeldung: 18.10.2017
(73) Patentinhaber: Bühler Motor GmbH, 90459 Nürnberg (DE)
(72) Erfinder: WEISKE, Klaus, 90571 Schwaig (DE)

(56) Entgegenhaltungen:
- WO-A1-2008/072438
- DE-B4-102011 079 226
- DE-C- 676 174
- DE-U1- 9 318 754
- FR-A- 1 059 088

## Beschreibung

Die Erfindung betrifft einen Pumpenmotor (1), mit einem Permanentmagnetrotor (2), einem Spalttopf (3), einem bewickelten Stator (4), einem Motorgehäuse (10), einem Pumpenkopf (11), einer Achse (5), welche in dem Spalttopf (3) einerseits und dem Pumpenkopf (11) andererseits festgelegt ist und einem Festlager (6), welches im Permanentmagnetrotor (2) eingepresst oder eingespritzt ist und diesen drehbeweglich auf der Achse (5) lagert.

Bei Verbrennungsmotoren im Kfz-Bereich sind in der Regel von der Kurbelwelle über einen Zahnriemen angetriebene mechanische Pumpen als Hauptkühlwasserpumpe vorhanden. Als Unterstützung oder ersatzweise bei abgestelltem Verbrennungsmotor kommen elektrische Zusatzkühlwasserpumpen zum Einsatz, die in der Regel als elektronisch kommutierte Gleichstrommotoren ausgebildet sind. Auch Hauptkühlwasserpumpen können elektrisch betrieben sein. Aus der DE 10 2011 079 226 B4 ist eine gattungsgemäße Pumpe bekannt, bei der Lagerbuchsen zur Lagerung des Permanentmagnetrotors auf der Achse verwendet werden. Hierbei kann durch einen Einpressvorgang der Lagerbuchse in den Permanentmagnetrotor eine Lauffläche des Lagers verformt werden, so dass punktuelle oder linienhafte Berührungen der Buchse mit der Achse die Folge sind. Besonders ausgeprägt ist dieser Effekt bei Lagerbuchsen mit unterschiedlichen Materialstärken, wie es bei Bundbuchsen der Fall ist. Derartige Verformungen führen in der Regel zu erhöhten Lagergeräuschen. Aus wirtschaftlichen Gründen können die Toleranzen für Lagerbuchsen nicht beliebig klein werden, daher kann es zu undefinierten Lagerpaarungen kommen, bei denen die Achse über die Lagerlänge ungleichmäßig anliegt und auch über eine Umdrehung Ungleichmäßigkeiten auftreten.

Die nächstliegende DE 10 2011 079 226 B4 offenbart einen Pumpenmotor mit einem Permanentmagnetrotor, einem Spalttopf, einem Stator, einem Motorgehäuse, einem Pumpenkopf, einer Achse und einem Festlager.

Aus der WO 2008/072438 ist ein Pumpenmotor mit einem Permanentmagnetrotor, einem Spalttopf, einem Stator, einem Motorgehäuse, einem Pumpenkopf, einer Achse und einem Festlager, bekannt.

Die FR 1059088 zeigt ein Gleitlager bestehend aus einem Pressring, welcher eingepresst ist, einem Laufring, welcher auf der Achse drehbar aufgenommen ist, und einer ringscheibenförmigen Nabe.

Die DE 676 174 offenbart ein Gleitlager mit einem Laufring, einem Tragring und einem dazwischen angeordneten ringförmigen Steg.

Die DE 9318754.8 zeigt ein Gleitlager bestehend aus einem Pressring, welcher eingepresst ist, einem Laufring, welcher auf der Achse drehbar aufgenommen ist, und einer ringscheibenförmigen Nabe.

Aufgabe der Erfindung ist es daher bei einem gattungsgemäßen Pumpenmotor für eine zuverlässige und wirtschaftlich herstellbare Lagerung des Permanentmagnetrotors auf der Achse zu sorgen, bei welcher über die komplette Lagerlänge und über eine komplette Umdrehung eine gleichmäßige Anlage des Lagers an der Achse erreichbar ist und kleine Winkelfehler ausgleichbar und Geräusche reduzierbar sind.

Diese Aufgabe wird erfindungsgemäß durch die Merkmale des Anspruchs 1 gelöst. Das erfindungsgemäße Lager besteht aus einem im Permanentmagnetrotor eingepressten Pressring, einen auf der Achse drehbar aufgenommenen Laufring und einer ringscheibenförmigen Nabe. Dies führt zu einer Funktionstrennung der einzelnen Lagerbestandteile. Der Pressring kann und darf sich beim Einpressvorgang geringfügig verformen, der Laufring behält seine für die Laufeigenschaften optimale Form bei und die ringscheibenförmige Nabe stellt das Verbindungsglied zwischen dem Pressring und dem Laufring dar. Die Nabe kann sich in einem pressringnahen Bereich geringfügige verformen, behält aber seine Form in einem laufringnahen Bereich bei und überträgt keine Verformungskräfte auf den Laufring. Das Festlager lässt sich dadurch besonders wirtschaftlich herstellen, da der Pressring, der Laufring und die Nabe ein einstückiges Bauteil bilden.

Weiterbildungen der Erfindung werden in den Unteransprüchen dargestellt.

Um den Laufring vor Verformungen zu schützen ist es vorteilhaft die Nabe nachgiebig auszubilden, so dass deren Steifigkeit nicht ausreicht um die Einpresskräfte auf den Laufring zu übertragen.

Um die Nachgiebigkeit der Nabe zu gewährleisten weist das Festlager einen H-förmigen oder U-förmigen Ringquerschnitt auf. Die Dicke der scheibenförmigen Nabe kann den Anforderungen entsprechend gewählt werden.

Um für gute Gleiteigenschaften auch bei axialer Kraftbeaufschlagung zu sorgen, kann eine Anlaufscheibe vorgesehen sein, welche zwischen dem Festlager und der Lageraufnahmehülse auf der Achse aufgenommen ist.

Der Laufring des Festlagers liegt axial der Lageraufnahmehülse oder, falls vorhanden, der Anlaufscheibe gegenüber.

Das Festlager ist zwischen einer Hohlwelle und einer Lageraufnahmehülse angeordnet. Beim Auftreten von Axialkräften kann die Nabe aufgrund ihrer Nachgiebigkeit dämpfend wirken, da der Pressring radial versetzt zum Laufring ist und nur der Pressring an der Hohlwelle anliegt. In der Regel wird das Festlager bis zur Hohlwelle aufgezogen. Der Laufring liegt gegenüber der Hohlwelle frei.

Radial ist das Festlager vorzugsweise zwischen einem Permanentmagneten und der Achse angeordnet. Das Festlager ist dabei unmittelbar in den Permanentmagneten eingepresst.

Der Permanentmagnet selbst ist mit der Hohlwelle formschlüssig verbunden. Vorzugsweise besteht der Permanentmagnet aus einem kunststoffgebundenen Seltenerdmagneten, welcher unmittelbar auf die Hohlwelle urgeformt ist. Die Formschlüssigkeit wird durch eine Nut am Außenumfang der Hohlwelle oder durch in anderer Weise geeignet geformte Rücksprünge hergestellt.

Die Hohlwelle ist mit einem Pumpenlaufrad verbunden oder einstückig urgeformt. Das Laufrad weist Pumpenflügel auf und kann zur Verbesserung des Wirkungsgrades eine Deckscheibe tragen.

Im Bereich des Pumpenlaufrads trägt die Hohlwelle ein sphärisches Gleitlager, welches mit einem sphärischen Gegenlager zusammenwirkt, welches in einer Aufnahme im Pumpenkopf gehalten ist. Im Betrieb wirken die sphärischen Lagerflächen derart, dass eine Selbstzentrierung stattfindet, so dass die Lagerpaarung sowohl eine Axiallagerfunktion als auch eine Radiallagerfunktion übernimmt. Diese Lagerart verbessert die Laufruhe deutlich.

Es wird vorgeschlagen das erfindungsgemäße Festlager aus einem Lagermaterial auszuführen. Dies kann ein kohlefaserdurchsetzter Kunststoff, ein Graphitmaterial, ein Sintermetall oder anderes sein.

Ein Ausführungsbeispiel der Erfindung wird nachfolgend anhand der Zeichnung näher erläutert. Es zeigen:
Fig. 1 eine Schnittansicht eines erfindungsgemäßen Pumpenmotors und
Fig. 2 eine räumliche Darstellung des Pumpenmotors.

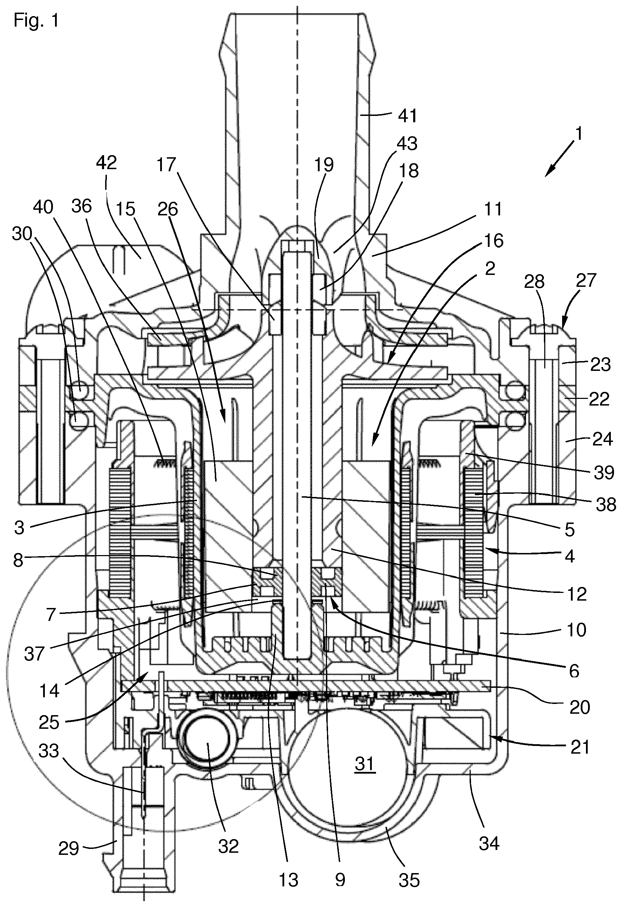

Fig. 1 zeigt eine Schnittansicht eines erfindungsgemäßen Pumpenmotors 1, mit einem bewickelten Stator 4, einem Permanentmagnetrotor 2, einem Spalttopf 3, einem Pumpenkopf 11, einer Leiterplatte 20, einer Trägerplatte 21 und einem Motorgehäuse 10. Der Stator 4, die Leiterplatte 20 und die Trägerplatte 21 befinden sich in einem Trockenraum 25. Der Permanentmagnetrotor 2 ist in einem Nassraum 26 um eine Achse 5 drehbar gelagert, welche einerseits im Spalttopf 3 und andererseits im Pumpenkopf 11 festgelegt ist. Der Spalttopf 3 weist einen Spalttopfflansch 22 und der Pumpenkopf 11 einen Pumpenkopfflansch 23 auf. Das Motorgehäuse 10 ist topfartig ausgebildet und weist einen Gehäuseflansch 24 und einen Steckerschacht 29 auf. Der Pumpenkopfflansch 23, der Spalttopfflansch 22 und der Gehäuseflansch 24 weisen Anschraubaugen 27 mit Schrauben 28 auf, durch welche der Pumpenkopf 11 und der Spalttopf 3 mit dem Motorgehäuse 10 verschraubt sind. Beiderseits des Spalttopfflanschs 22 sind O-Ringe 30 als Dichtelemente angeordnet. Die Leiterplatte 20 ist mit einer Vielzahl von SMD-Bauteilen bestückt. Größere Bauteile, wie ein Elektrolytkondensator 31 und eine Drosselspule 32 sind auf der Trägerplatte 21 mechanisch gehalten, aber auf der Leiterplatte 20 elektrisch kontaktiert. Die Leiterplatte 20 und die Trägerplatte 21 sind zwischen dem Stator 4 und dem Motorgehäuse 10 axial fixiert. Die Leiterplatte 20 ist zwischen dem Stator 4 und der Trägerplatte 21 axial und radial fixiert. In der Trägerplatte 21 ist ein Kontaktelement 33 mechanisch aufgenommen, welches ebenfalls mit der Leiterplatte 20 elektrisch verbunden ist. Ein Boden 34 des topfartigen Motorgehäuses 10 weist eine Ausbuchtung 35 auf in welche an die Form des Elektrolytkondensators 31 angepasst ist. Weiter ist ein Pumpenlaufrad 16 dargestellt, welches mit einer Hohlwelle 12 einstückig ist. Das Pumpenlaufrad 16 weist eine Deckscheibe 36 auf. Der Permanentmagnetrotor 2 mit Pumpenlaufrad 16 ist über ein Festlager 6 und ein sphärisches Lager 17 auf der Achse 5 und zwischen dem Pumpenkopf 11 und dem Spalttopf 3 drehbeweglich gelagert. Das Festlager 6 ist zwischen einem um die Hohlwelle 12 gespritzten hohlzylindrischen und aus einem kunststoffgebundenen Material bestehenden Permanentmagneten 15 und der Achse 5 angeordnet. Das Festlager 6 lagert das Pumpenlaufrad 2 radial als auch über das Ende der Hohlwelle 12 und einer Anlaufscheibe 14, welche an einer mit dem Spalttopf 3 einstückigen Lageraufnahmehülse 13 anliegt, axial. Das Festlager 6 weist einen Pressring 7, einen Laufring 8 und eine scheibenförmige Nabe 9 auf. Die Dicke der Nabe 9 ist so gewählt, dass eine radiale Verformungskraft, welche bei einem Einpressvorgang des Festlagers 6 in einen zentralen Hohlraum 37 des Permanentmagneten 15 auf die Nabe 9 einwirkt nicht bis zum Laufring 8 übertragen wird, sondern eine Verformung der Nabe 9 bewirkt. Die hohlzylindrische Form des Laufrings 8 bleibt zum größten Teil erhalten. Weiter sind in Fig. 1 ein Statorblechpaket 38, Isolierelemente 39 und eine Statorwicklung 40 dargestellt. Der Pumpenkopf 11 umfasst einen Saugstutzen 41 und einen Druckstutzen 42. Im Saugstutzen 41 stellen Speichen 43 eine durchlässige Verbindung zwischen dem Saugstutzen 41 und der Aufnahme 19 her.

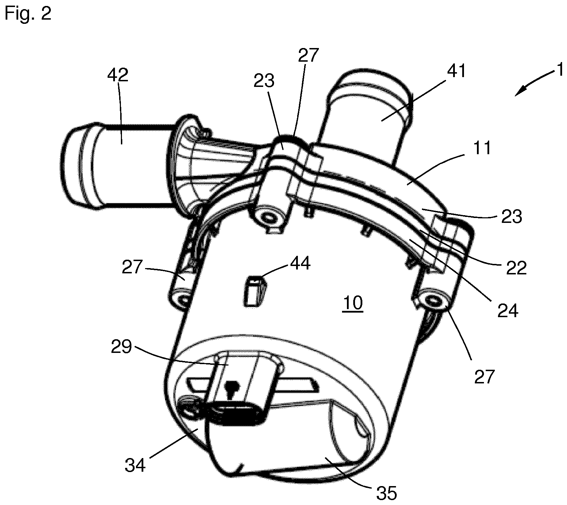

Fig. 2 zeigt eine räumliche Darstellung des Pumpenmotors 1, mit dem Pumpenkopf 11, mit Saugstutzen 41 und Druckstutzen 42 und einem Pumpenkopfflansch 23, einem mit dem Spalttopf einstückigen Spalttopfflansch 22, dem Motorgehäuse 10 mit dem Gehäuseflansch 24, dem Boden 34, dem Steckerschacht 29 und der Ausbuchtung 35 zur Aufnahme eines Elektrolytkondensators. Weiter sind Anschraubaugen 27 zu erkennen, welche im Pumpenkopfflansch 23, dem Spalttopfflansch 22 und dem Gehäuseflansch 24 als Erweiterungen ausgebildet sind und eine Schraubverbindung ermöglichen. Am Motorgehäuse 10 ist eine Axialsicherung 44 ausgebildet, welche dazu dient eine um das Motorgehäuse 10 gelegte ringförmige Befestigungseinrichtung axial zu sichern.

**Bezugszeichenliste**

| | | | |
|---|---|---|---|
| 1 | Pumpenmotor | 31 | Elektrolytkondensator |
| 2 | Permanentmagnetrotor | 32 | Drosselspule |
| 3 | Spalttopf | 33 | Kontaktelement |
| 4 | Stator | 34 | Boden |
| 5 | Achse | 35 | Ausbuchtung |
| 6 | Festlager | 36 | Deckscheibe |
| 7 | Pressring | 37 | Hohlraum |
| 8 | Laufring | 38 | Statorblechpaket |
| 9 | Nabe | 39 | Isolierelement |
| 10 | Motorgehäuse | 40 | Statorwicklung |
| 11 | Pumpenkopf | 41 | Saugstutzen |
| 12 | Hohlwelle | 42 | Druckstutzen |
| 13 | Lageraufnahmehülse | 43 | Speiche |
| 14 | Anlaufscheibe | 44 | Axialsicherung |
| 15 | Permanentmagnet | | |
| 16 | Pumpenlaufrad | | |
| 17 | sphärisches Gleitlager | | |
| 18 | sphärisches Gegenlager | | |
| 19 | Aufnahme | | |
| 20 | Leiterplatte | | |
| 21 | Trägerplatte | | |
| 22 | Spalttopfflansch | | |
| 23 | Pumpenkopfflansch | | |
| 24 | Gehäuseflansch | | |
| 25 | Trockenraum | | |
| 26 | Nassraum | | |
| 27 | Anschraubauge | | |
| 28 | Schraube | | |
| 29 | Steckerschacht | | |
| 30 | O-Ring | | |

## Patentansprüche

1. Pumpenmotor (1), mit einem Permanentmagnetrotor (2), einem Spalttopf (3), einem bewickelten Stator (4), einem Motorgehäuse (10), einem Pumpenkopf (11), einer Achse (5), welche in dem Spalttopf (3) einerseits und dem Pumpenkopf (11) andererseits festgelegt ist und einem Festlager (6), welches im Permanentmagnetrotor (2) eingepresst ist und diesen drehbeweglich auf der Achse (5) lagert, **dadurch gekennzeichnet, dass** das Festlager (6) aus einem Pressring (7), welcher im Permanentmagnetrotor (2) eingepresst oder eingespritzt ist, einem Laufring (8), welcher auf der Achse (5) drehbar aufgenommen ist und einer ringscheibenförmigen Nabe (9), die das Verbindungsglied zwischen dem Pressring (7) und dem Laufring (8) darstellt, besteht und dass der Pressring (7), der Laufring (8) und die Nabe (9) einstückig sind.

2. Pumpenmotor nach Anspruch 1, **dadurch gekennzeichnet, dass** die Nabe (9) nachgiebig ausgebildet ist.

3. Pumpenmotor nach Anspruch 1 oder 2, **dadurch gekennzeichnet, dass** das Festlager (6) einen H-förmigen oder U-förmigen Ringquerschnitt aufweist.

4. Pumpenmotor nach Anspruch 1, 2 oder 3, **dadurch gekennzeichnet, dass** das Festlager (6) axial zwischen einer Hohlwelle (12) und einer Lageraufnahmehülse (13) angeordnet ist.

5. Pumpenmotor nach Anspruch 4, **dadurch gekennzeichnet, dass** zwischen dem Festlager (6) und der Lageraufnahmehülse (13) eine Anlaufscheibe (14) auf der Achse (5) aufgenommen ist.

6. Pumpenmotor nach Anspruch 4 oder 5, **dadurch gekennzeichnet, dass** der Laufring (8) des Festlagers (6) axial der Lageraufnahmehülse (13) oder der Anlaufscheibe (14) gegenüberliegt.

7. Pumpenmotor nach Anspruch 4, **dadurch gekennzeichnet, dass** der Pressring (7) axial der Hohlwelle (12) gegenüberliegt.

8. Pumpenmotor nach Anspruch 7, **dadurch gekennzeichnet, dass** der Pressring (8) axial an der Hohlwelle (12) anliegt.

9. Pumpenmotor nach zumindest einem der vorangehenden Ansprüchen, **dadurch gekennzeichnet, dass** das Festlager (6) radial zwischen der Achse (5) und einem Permanentmagneten (15) angeordnet ist.

10. Pumpenmotor nach den Ansprüchen 4 und 9, **dadurch gekennzeichnet, dass** die Hohlwelle (12) mit dem Permanentmagneten (15) formschlüssig verbunden ist.

11. Pumpenmotor nach Anspruch 4, **dadurch gekennzeichnet, dass** die Hohlwelle (12) mit einem Pumpenlaufrad (16) verbunden ist oder mit einem Pumpenlaufrad (16) einstückig ist.

12. Pumpenmotor nach Anspruch 11, **dadurch gekennzeichnet, dass** die Hohlwelle (12) im Bereich des Pumpenlaufrads (16) ein sphärisches Gleitlager (17) trägt, welches mit einem sphärischen Gegenlager (18) zusammenwirkt, welches in einer Aufnahme (19) im Pumpenkopf (11) gehalten ist.

13. Pumpenmotor nach zumindest einem der vorangehenden Ansprüche, **dadurch gekennzeichnet, dass** das Festlager (6) aus einem Sintermetall besteht.

## Claims

1. A pump motor (1) having a permanent magnet rotor (2), a split case (3), a wound stator (4), a motor housing (10), a pump head (11), an axle (5), fixed on the one hand in the split case (3) and on the other hand in the pump head (11), and a fixed bearing (6), pressed in the permanent magnet rotor (2) and mounting the latter on the axle (5) in a rotationally-movable manner, **characterized in that** the fixed bearing (6) consists of a press ring (7), pressed in or injected moulded in the permanent magnet rotor (2), a race (8), rotatably received on the axle (5), and an annular-disc-shaped hub (9), constituting the connection member between the press ring (7) and the race (8), and **in that** the press ring (7), the race (8) and the hub (9) are in one piece.

2. A pump motor according to claim 1, **characterized in that** the hub (9) is non-rigid.

3. A pump motor according to claim 1 or 2, **characterized in that** the fixed bearing (6) has an H-shaped or U-shaped annular cross-section.

4. A pump motor according to claim 1, 2 or 3, **characterized in that** the fixed bearing (6) is arranged axially between a hollow shaft (12) and a bearing receiving sleeve (13).

5. A pump motor according to claim 4, **characterized in that** a thrust washer (14) is received on the axle (5), between the fixed bearing (6) and the bearing receiving sleeve (13).

6. A pump motor according to claim 4 or 5, **characterized in that** the race (8) of the fixed bearing (6) is axially opposite the bearing receiving sleeve (13) or the thrust washer (14).

7. A pump motor according to claim 4, **characterized in that** the press ring (7) is axially opposite the hollow shaft (12).

8. A pump motor according to claim 7, **characterized in that** the press ring (8) axially abuts the hollow shaft (12).

9. A pump motor according to at least one of the preceding claims, **characterized in that** the fixed bearing (6) is arranged radially between the axle (5) and a permanent magnet (15).

10. A pump motor according to claims 4 and 9, **characterized in that** the hollow shaft (12) is connected in a form-locked manner to the permanent magnet (15).

11. A pump motor according to claim 4, **characterized in that** the hollow shaft (12) is connected to a pump impeller (16) or is in one piece with a pump impeller (16).

12. A pump motor according to claim 11, **characterized in that** the hollow shaft (12) bears a spherical slide bearing (17) in the region of the pump impeller (16), which slide bearing (17) cooperates with a spherical counter bearing (18) which is held in a receiver (19) in the pump head (11).

13. A pump motor according to at least one of the preceding claims, **characterized in that** the fixed bearing (6) is composed of a sintered metal.

## Revendications

1. Moteur de pompe (1), comprenant un rotor à aimants permanents (2), une gaine ou un pot d'entrefer (3), un stator bobiné (4), un boitier de moteur (10), une tête de pompe (11), un axe (5) qui est fixé dans la gaine ou le pot d'entrefer (3) d'une part et la tête de pompe (11) d'autre part, et un palier fixe (6), qui est inséré de manière serrée à force dans le rotor à aimants permanents (2) et assure le montage rotatif de celui-ci sur l'axe (5),
**caractérisé en ce que** le palier fixe (6) est constitué par un anneau de serrage à force (7), qui est serré à force ou injecté dans le rotor à aimants permanents (2), un anneau de mouvement (8), qui est monté rotatif sur l'axe (5), et un moyeu (9) en forme de disque annulaire, qui forme l'organe de liaison entre l'anneau de serrage à force (7) et l'anneau de mouvement (8), et **en ce que** l'anneau de serrage à force (7), l'anneau de mouvement (8) et le moyeu (9) sont réalisés d'un seul tenant en formant une seule pièce.

2. Moteur de pompe selon la revendication 1, **caractérisé en ce que** le moyeu (9) est réalisé de façon à être déformable de manière flexible.

3. Moteur de pompe selon la revendication 1 ou la revendication 2, **caractérisé en ce que** le palier fixe (6) présente une section transversale annulaire en forme de H ou en forme de U.

4. Moteur de pompe selon la revendication 1, 2 ou la revendication 3, **caractérisé en ce que** le palier fixe (6) est agencé axialement entre un arbre creux (12) et une douille d'accueil de palier (13).

5. Moteur de pompe selon la revendication 4, **caractérisé en ce qu'**une bague de butée dynamique (14) est placée sur l'axe (5), entre le palier fixe (6) et la douille d'accueil de palier (13).

6. Moteur de pompe selon la revendication 4 ou la revendication 5, **caractérisé en ce que** l'anneau de mouvement (8) du palier fixe (6) est situé axialement en regard de la douille d'accueil de palier (13) ou de la bague de butée dynamique (14).

7. Moteur de pompe selon la revendication 4, **caractérisé en ce que** l'anneau de serrage à force (7) est situé axialement en regard de l'arbre creux (12).

8. Moteur de pompe selon la revendication 7, **caractérisé en ce que** l'anneau de serrage à force (8) s'appuie axialement sur l'arbre creux (12).

9. Moteur de pompe selon l'une au moins des revendications précédentes, **caractérisé en ce que** le palier fixe (6) est agencé radialement entre l'axe (5) et un aimant permanent (15) .

10. Moteur de pompe selon les revendications 4 et 9, **caractérisé en ce que** l'arbre creux (12) est relié par complémentarité de formes à l'aimant permanent (15).

11. Moteur de pompe selon la revendication 4, **caractérisé en ce que** l'arbre creux (12) est relié à une roue active de pompe (16) ou bien est réalisé d'un seul tenant avec une roue active de pompe (16).

12. Moteur de pompe selon la revendication 11, **caractérisé en ce que** l'arbre creux (12) porte, dans la zone de la roue active de pompe (16), un élément de palier lisse sphérique (17), qui coopère avec un élément de palier conjugué sphérique (18), qui est tenu dans un emplacement d'accueil (19) dans la tête de pompe (11).

13. Moteur de pompe selon l'une au moins des revendications précédentes, **caractérisé en ce que** le palier fixe (6) est réalisé en un métal fritté.
